(19) **Europäisches Patentamt / European Patent Office / Office européen des brevets**

(11) **EP 3 522 159 A1**

(12) **EUROPEAN PATENT APPLICATION**
published in accordance with Art. 153(4) EPC

(43) Date of publication:
**07.08.2019 Bulletin 2019/32**

(21) Application number: **17855948.0**

(22) Date of filing: **22.09.2017**

(51) Int Cl.:
**G11B 5/09** (2006.01)    **G11B 20/10** (2006.01)
**G11B 20/14** (2006.01)

(86) International application number:
**PCT/JP2017/034181**

(87) International publication number:
**WO 2018/061994 (05.04.2018 Gazette 2018/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **29.09.2016 JP 2016192175**

(71) Applicant: **Nidec Sankyo Corporation**
Suwa-gun, Nagano 393-8511 (JP)

(72) Inventors:
• **NAKAJIMA, Shigeo**
Suwa-gun
Nagano 393-8511 (JP)
• **HIGASHI, Katsuhisa**
Suwa-gun
Nagano 393-8511 (JP)

(74) Representative: **Becker Kurig Straus**
**Patentanwälte**
**Bavariastrasse 7**
**80336 München (DE)**

(54) **INFORMATION REPRODUCTION DEVICE AND INFORMATION REPRODUCTION METHOD**

(57)    In a card reader 10, a peak detecting unit 142 is provided with a judging section 1421 which judges whether a current digital value produced by an AD converter 141 has changed from a prior digital value, a holding section 1422 which is capable of holding the digital value output from the AD converter 141 as an extreme value and its position information, and an updating section 1423 which, when the current digital value has changed from the prior digital value, updates the extreme value and its position information held in the holding section 1422 with the current digital value as a current extreme value and its position information, or when the current digital value matches the prior digital value, acquires the intermediate position between the position of the current digital value and the position of the prior digital value as a current extreme value position, holds the matching digital value as a current extreme value, and updates the position information with the intermediate position information.

FIG. 4

**Description**

**TECHNICAL FIELD**

The present invention relates to an information reproducing device which reproduces recorded information in a predetermined format (a modulation method) and relates to an information reproducing method.

**BACKGROUND ART**

For example, an information reproducing device (a magnetic reproduction circuit), adopted for a magnetic card reader-writer which reads an F and 2F signal corresponding to a binary "0" and "1" signal magnetically recorded by a frequency modulation method, has the following configuration.

This information reproducing device reproduces a signal (magnetic data) recorded on a card with a magnetic head, amplifies the reproduced signal (analog waveform) at an amplifier circuit, detects peak points of the signal with a peak detecting circuit, and inverts the output signal at the peak points to waveform-shape it to a rectangular waveform signal. The rectangular waveform signal is a frequency modulation signal (an F2F modulation signal) and is demodulated at an F2F demodulation circuit.

However, the peak detection by an analog method requires circuits to be switched to also read a card with a log of noise or a demagnetized card with low output; therefore, the scale for circuits becomes large, increasing cost. Also, if the circuits need to be switched, multiple methods need to be implemented to read, making it take longer to read a card.

Therefore, an information reproducing device has been proposed, in which a digital peak detection is adopted to support even a recording medium having an output fluctuation without switching circuits, so the scale for circuits and cost can be minimized and the reading time can be shortened (Patent Reference 1, for example).

**CITATION LIST**

**PATENT LITERATURE**

Patent Reference 1: Japanese Unexamined Patent Application Publication No. 2013-211083

**SUMMARY**

**TECHNICAL PROBLEMS**

The information reproducing device disclosed in the above-mentioned Patent Reference 1 can automatically change a peak detection threshold depending on the output level of a digital signal; therefore, there is no need to switch circuits, keeping the scale of the circuit small and lowering the cost. Also, one-time reading can handle either a card with a log of noise or a demagnetized card, thus shortening the reading time.

However, the information reproducing device disclosed in Patent Reference 1 may have a read error on a demagnetized card if a peak shift occurs in which a reproduced waveform is collapsed and therefore the original positions of peak points are shifted.

Considering the above problem, then, an objective of the present invention is to provide an information reproducing device in which a read error can be prevented from occurring even with a magnetic recording medium in which peak points are shifted.

**SOLUTIONS TO PROBLEMS**

To solve the above-mentioned problems, the information reproducing device of the present invention comprises: an analog-digital (AD) converter which samples an analog signal produced by reproducing information recorded on a magnetic recording medium, coverts the analog signal to a digital signal, and outputs the digital signal together with position information of the digital values corresponding to time lapse; a peak detecting unit which, upon receiving the digital values of the digital signal produced by the AD converter, detects a peak point corresponding to a position of an extreme value of a reproduced signal according to whether an inputted digital value exceeds a threshold, and the threshold is a judgment level set from the digital signal by following an output of the AD converter; and an information generating unit which generates a rectangular wave signal of the reproduced signal, which is waveform-shaped according to an information of an interval between peaks detected at the peak detecting unit. And, the peak detecting unit includes: a judging section which, upon receiving the digital value of the digital signal produced by the AD converter, judges whether a current digital value has changed from a prior digital value; a holding section which holds the digital values of the digital signal produced by the AD converter as an extreme value and its position information; and an updating section which, when a judgment result of the judging section indicates that the current digital value has changed from the prior digital value, updates with the current digital value as an extreme value together with its position information, or when the current digital value matches the prior digital value, acquires an intermediate position between a position of the current digital value and a position of the prior digital value as the current extreme value position, holds a matching digital value as an extreme value and updates the position information with an intermediate position information.

In the present invention, a read error can be prevented from occurring even with a magnetic recording medium with shifted peak points.

In the present invention, it is preferred that, when the current digital value matches the prior digital value, the updating section acquires a midpoint position between the position of the current digital value and the position of the prior digital value as a current extreme value position, holds the matching digital value as an extreme value and update the position information with a midpoint position information.

In the present invention, when the current digital value matches the prior digital value, a midpoint between the time position of the prior digital value and the time position of the current (present) digital value is acquired, and because an ideal waveform at that time is laterally symmetric, the midpoint can be considered as an original peak point. Therefore, even a magnetic recording medium with shifted peak points can be read without a read error.

In the present invention, it is preferred that, the holding section includes: a first variable part which is capable of holding an extreme value corresponding to the prior digital value and its position information; and a second variable part which is capable of holding an extreme value corresponding to the current digital value and its position information. When the judgment result of the judging section indicates that the current digital value has changed from the prior digital value, the updating section update the first variable part and the second variable part with the current digital value as the extreme value, and when the current digital value matches the prior digital value, the updating section acquire a midpoint position between the position information held in the first variable part and the position information held in the second variable part as a current extreme value position, holds the matching digital value as an extreme value, and updates the position information with a midpoint position information.

In the present invention, when the current digital value matches the prior digital value, a midpoint of the time position between the prior digital value and the current (present) digital value can easily be acquired by taking an average of the value at the first variable part and the value at the second variable part; since an ideal waveform at this time is laterally symmetric, the midpoint can be considered as the original peak point. Because of this, even a magnetic recording medium with shifted peak points can be read without a read error.

Also, an information reproducing method of the present invention comprises: an analog-digital (AD) converting step, in which an analog signal produced by reproducing information recorded on a magnetic recording medium is sampled and converted to a digital signal and the digital signal is output together with the position information of digital values corresponding to time lapse; a peak detecting step, in which, upon receiving the digital value of the digital signal produced by the AD converting step, a peak point corresponding to a position of an extreme value of a reproduced signal is detected according to whether an inputted digital value exceeds a threshold, and the threshold is a judgment level set from the digital signal by following an output of the AD converting step; and an information generating step, in which a rectangular wave signal of the reproduced signal, which is wave-shaped according to an information of an interval between peaks detected at the peak detecting step, is generated. In the peak detecting step, upon receiving the digital value of the digital signal produced by the AD converting step, when a current digital value has changed from a prior digital value, an update is made with the current digital value as an extreme value together with its position information, or when the current digital value matches the prior digital value, an intermediate position between a position of the current digital value and a position of the prior digital value is acquired as a current extreme value position, a matching digital value is held as an extreme value, and the position information is updated with an intermediate position information.

In the present invention, a read error can be prevented even with a magnetic recording medium with shifted peak points.

In the peak detecting step of the present invention, when the current digital value matches the prior digital value, a midpoint position between the position of the current digital value and the position of the prior digital value position is acquired as an extreme value position, the matching digital value is held as an extreme value, and the position information is updated with a midpoint position information.

In the present invention, when a current digital value matches the prior digital value, the midpoint between the time position of the prior digital value and the time position of the current (present) digital value is acquired; since an ideal waveform in this case is laterally symmetric, the midpoint can be considered as an original peak point. Because of this, even a magnetic recording medium with shifted peak points can be read without a read error.

In the present invention, it is preferred that, at the peak detecting step, a first variable part which is capable of holding an extreme value corresponding to the prior digital value and its position information, and a second variable section which is capable of holding an extreme value corresponding to the current digital value and its position information are included, and that, when a judgment result of the judging section indicates that the current digital value has changed from the prior digital value, the first variable part and the second variable part are updated with the current digital value as an extreme value, when the current digital value matches the prior digital value, a midpoint position between the position information held in the first variable part and the position information held in the second variable part is acquired as a current extreme value position, the matching digital value is held as an extreme value, and the position information is updated with a midpoint position information.

In the present invention, when the current digital value matches the prior digital value, the midpoint between the time position of the prior digital value and the time position of the current (present) digital value can easily be acquired by taking an average of the value held in the first variable section and the value held in the second variable section; since an ideal waveform in this case is laterally symmetric, the midpoint can be considered as an original peak point. Because of this, even a magnetic reading medium with shifted peak points can be read without a read error.

## EFFECT OF THE INVENTION

According to the present invention, the information reproducing device and the information reproducing method can prevent a read error even with a magnetic recording medium with shifted peak points.

## BRIEF DESCRIPTION OF THE DRAWINGS

FIG. 1 is a block diagram of a configuration example of an information reproducing device of the first embodiment of the present invention.
FIG. 2 shows diagrams of a signal processing waveform of a main part by the information reproducing device of FIG. 1.
FIG. 3 shows diagrams explaining a peak detecting method of this embodiment to judge if it is a peak value depending on whether two peak points exceed a threshold (a judgment level).
FIG. 4 is a block diagram of a configuration example of judging and updating sections on extreme values and their position information, which are provided in the peak detecting unit of this embodiment as a read error countermeasure.
FIG. 5 shows diagrams explaining an example of the information update processing by the updating section of this embodiment.
FIG. 6 is a flowchart of the information update processing in which the signal is judged as a normal waveform or a trapezoidal waveform at the time of peak detection processing, explaining a case in which the value of the first peak value as a judgment subject is a peak value on the minimum side (the trough side).
FIG. 7 is a flowchart of the information update processing in which the signal is judged as a normal waveform or a trapezoidal waveform at the time of peak detection processing, explaining a case in which the value of the first peak as a decision subject is a peak value on the maximum side (the crest side).
FIG. 8 is a flowchart of an overall operation outline of the information reproducing device of this embodiment.
FIG. 9 is a block diagram of a configuration example of an information reproducing device of a second embodiment of the present invention.

## DESCRIPTION OF EMBODIMENTS

Embodiments of the present invention are described hereinafter associated with the drawings.

<First Embodiment

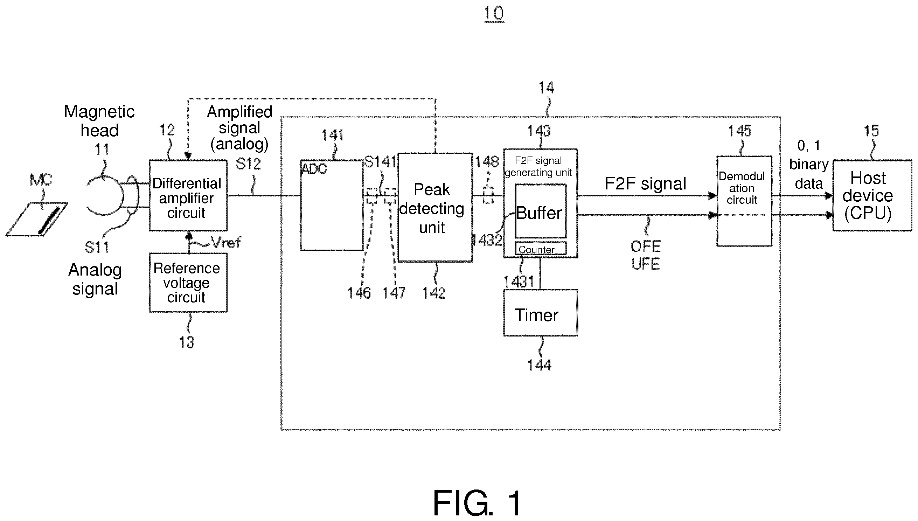

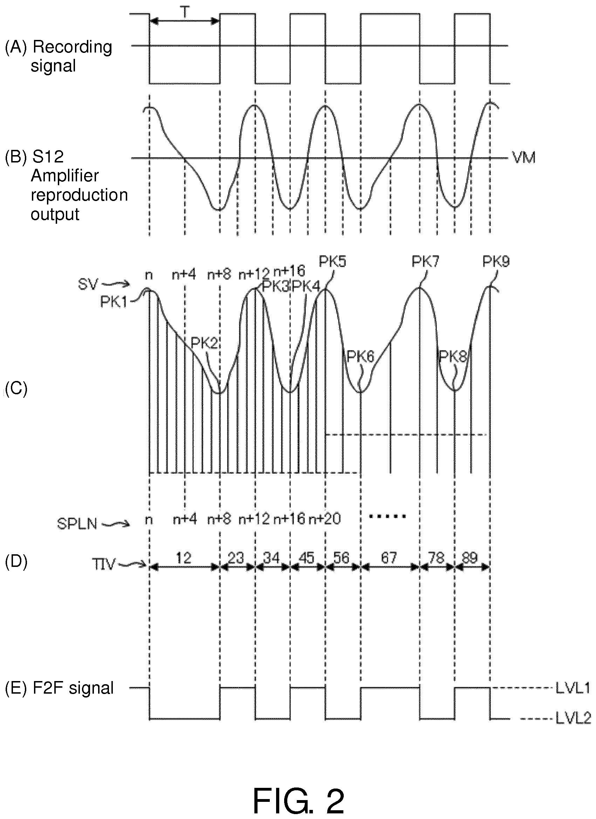

FIG. 1 is a block diagram of a configuration example of an information reproducing device of the first embodiment of the present invention. FIG. 2 shows diagrams of a signal processing waveform of a main portion by the information reproducing device of FIG. 1.

(Configuration of Card Reader)

In this embodiment, the information reproducing device is described using an example of a card reader which reproduces information recorded on a magnetic card, which is a recording medium, (hereinafter referred to "a card reader"). This embodiment uses a reading/reproduction example in which an F and 2F signal corresponding to "0" and "1" in a binary system magnetically recorded by a frequency modulation method is read and reproduced. Note, however, that the present technology is not limited to the F2F method, but can be adapted to various methods such as an F3F method, an NRZI method, an MFM method, etc.

As shown in FIG. 1, a card reader 10 is configured including a magnetic head 11, a differential amplifier circuit 12, a reference voltage circuit 13, a digital reproduction processing circuit 14, and host device (CPU). The digital reproduction processing circuit 14 in the first embodiment includes an analog-digital converter (an AD converter: ADC) 141, a peak detecting unit 142, an F2F signal generating unit 143 as an information generating unit, a timer 144 and a demodulation circuit 145.

The magnetic head 11 reads magnetically-recorded information on a magnetic card MC (hereinafter called as "card MC"), which is a magnetic recording medium, by an F2F demodulation method and outputs it as an analog signal, as shown in (A) of FIG. 2.

The differential amplifier circuit 12, configured by a computation amplifier, amplifies an analog signal S11, which is read out and reproduced by the magnetic head 11, to a proper level. Then, as shown in (B) of FIG. 2, the amplified analog signal S12 is output to the AD converter 141 of the digital reproduction processing circuit 14. The differential amplifier circuit 12 sets an intermediate value VM of the output analog signal S12, based on the reference voltage Vref supplied by the reference voltage circuit 13.

The differential amplifier circuit 12 has an automatic gain control (AGC) function. As indicated by a broken line in FIG. 1, for example, the gain of the differential amplifier circuit 12 is controlled according to the peak detection information at the peak detecting unit 142 of the digital reproduction processing circuit 14. In this embodiment, the differential amplifier circuit 12 differentially amplifies the analog signal S11, which is reproduced by the magnetic head 11, to the level corresponding to the peak detection information from the peak detecting unit 142 of the digital reproduction processing circuit 14. The differential amplifier circuit 12 implements a gain control to set the amplitude of the signal at 1/4 of a full range.

The reference voltage circuit 13 supplies the reference voltage Vref, which is the intermediate value VM of the output level, to the differential amplifier circuit 12.

The AD converter 141 samples the analog signal S12, which has been amplified at the differential amplifier circuit 12, converts it to a digital signal, and outputs the digitally-converted signal as a signal S141 together with the position information of the digital value, which corresponds to the time lapse, to the peak detecting unit 142. The AD converter 141 samples the analog signal S12, which has been amplified at the differential amplifier circuit 12, with a predetermined frequency at 300kHz, for example, and converts it to a digital signal, and outputs this digital signal as a signal S141 together with the position information of the digital value corresponding to the time lapse to the peak detecting unit 142. In other words, the AD converter 141 samples the analog signal reproduced by the magnetic head 11 to convert it to a digital signal every predetermined time period.

As shown in (C) of FIG. 2, the AD converter 141 implements a sampling processing at each of the sampling points (timing) indicated by sampling numbers SPLN (n), ···, (n+4), ···. The sampling numbers SPLN are used as the position information at the peak detecting unit 142 in the next stage. The position information includes time information. Also, the AD converter 141 outputs to the peak detecting unit 142 the signal S141 which includes the position information created by the sampling numbers SPLN and each of the sampling point values SV (n), ···, (n+4), ···.

Upon receiving the digital signal S141 output from the AD converter 141, the peak detecting unit 142 detects peak points corresponding to the positions of extreme values (the maximum values and the minimum values) of the magnetic data. More specifically described, the peak detecting unit 142, upon receiving the digital values of the digital signal S141 from the AD converter 141, detects the peak points corresponding to the positions of extreme values of the reproduced signal according to whether the inputted digital value exceeds a certain threshold, which is a judgment level set from the digital signal by following the output of the AD converter 141.

The peak detecting unit 142 acquires the information of time intervals (interval) TIV of peak points acquired from the multiple peak point information and outputs the signal S142 containing the peak point information and the time interval TIV information to the F2F signal generating unit 143. This time interval TIV information as the interval information corresponds to the time interval information.

As described above, the peak detecting unit 142 automatically sets a waveform detection threshold (a judgment level) at the time of the peak detection by following the output level of the AD converter 141. Because of this function, a card MC having fluctuated output can be read without a need to switch circuits. The peak detecting unit 142 has adopted a judging method by which, when two peak points exceed certain thresholds (judgment levels), they are considered as peak points regarding a card MC with a lot of noise.

The peak detecting unit 142 of this embodiment can adopt a peak detecting method, which is described later.

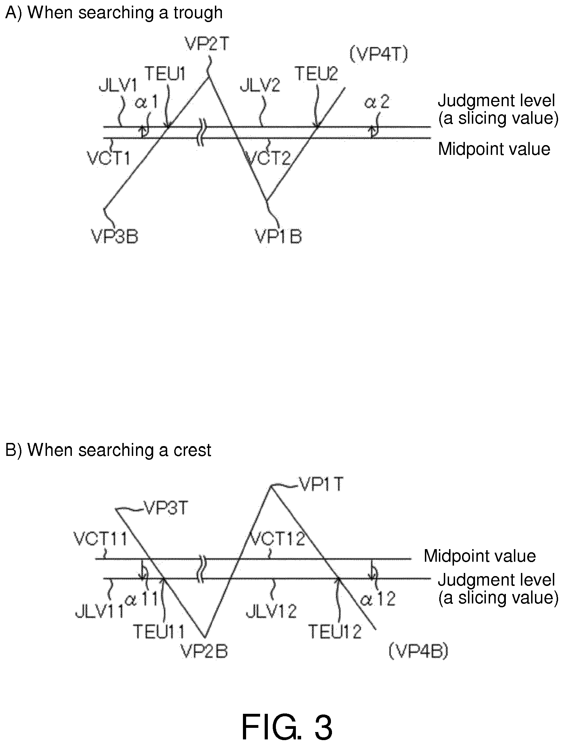

(A) and (B) of FIG. 3 are diagrams to explain the peak detecting method used to judge if two peak points are peak values depending on whether they exceed threshold values (judgment levels) at the peak detecting unit of this embodiment. (A) of FIG. 3 is a diagram for explaining the peak detecting method used for a case where the value of the first peak, which is a judgment subject, is a peak value on the minimum side (the trough side); (B) of FIG. 3 is a diagram for explaining the peak detecting method used for a case where the first peak value, which is a judgment subject, is a peak value on the maximum side (the crest side). Note that, in (A) and (B) of FIG. 3, the signal waveform is shown as a triangular waveform for easier understanding.

As shown in (A) and (B) of FIG. 3, the peak detecting unit 142 takes, for the first peak value VP1 (B, T) as the judgment subject, the prior, second peak value VP2 (B, T), the second prior, third peak value VP3 (B, T), and the fourth peak value VP4 (B, T), which is a post value of the first peak value VP1 (B, T). The peak detecting unit 142 acquires a first intermediate value VCT1, VCT11 between the third peak value VB3 (B, T) and the second peak value VP2 (B, T) and acquires a second intermediate values VCT2, VCT12 between the second peak value VB2 (B, T) and the first peak value VB1 (B, T). The peak detecting unit 142 acquires a first correction value $\alpha 1$, $\alpha 11$ by multiplying the difference between the third peak value VP3 (B, T) and the second peak value VP2 (B or T) by a predetermined ratio based on the difference and adds the first correction value $\alpha 1$, $\alpha 11$ to the first intermediate value VCT1, VCT11 to acquires a first threshold value JVL1, JVL11. The peak detecting unit 142 also acquires a second correction value $\alpha 2$, $\alpha 12$ by multiplying the difference between the second peak value VP2 and the first peak value VP1 by a predetermined ratio based on the difference and adds the second correction $\alpha 2$, $\alpha 12$ to the second intermediate value VCT2, VCT12 to acquire a second threshold JVL2, JVL12. Then, the peak detecting unit 142 determines the first peak value VP1 (B, T) by confirming that the digital value corresponding to the second peak value VP2 (B, T) exceeds the first intermediate value VCT1, VCT11 and the first threshold JVL1, JVL11 and the digital value corresponding to the next peak value VP4 (B, T) exceeds the second intermediate value VCT2, VCT12 and the second threshold value JVL2, JVL12.

As shown in (A) of FIG. 3, when the first peak value as a judgment subject is a peak value on the minimum value side (the trough side), a condition needs to be satisfied in which the peak value should not only exceed the threshold (the slicing value), but also be greater than the first peak value VP1 on the minimum value side (the trough side) by a fixed value so that the peak detecting unit 142 will not judge a small noise as a peak. As shown in (B) of FIG. 3, when the first peak value as a judgment subject is a peak value on the maximum value side (the crest side), a condition needs to be satisfied in which the peak value should not only exceed the threshold (the slicing value), but also be smaller than the first peak value VP1 on the maximum value side (the crest side) by a fixed value so that the peak detecting unit 142 will not judge a small noise as a peak.

The card reader 10 adopts this peak detecting method to support a card MC with a log of noises to reproduce information with certainty. The peak point detecting method is described in more detail later.

A read error may occur if a demagnetized card MC, for example, has a peak shift in which the reproduced waveform is distorted and the positions of the original peak points found shifted when a peak detection by the above peak detecting method is implemented. More specifically described, a peak shift means that peak points become shifted from the original positions; the bigger the shift is, the higher the possibility of misjudgment is on binary "1", "0" in the digital data. In the judgment of binary "1", "0" in the digital data, a threshold value is 70% of the time interval of 1 bit (a standard interval of data "0"); when a bit interval is longer than 70% of the time interval of 1 bit, the bit is determined "0", and when shorter, "1". Therefore, when a "0" is found shorter than 70% of the time interval of 1 bit or a "1" is found longer than 70%, it is categorized as a read error.

The peak detecting unit 142 of this embodiment is provided with following processing functions to prevent read error.

Receiving a digital value SV of the digital signal S141 from the AD converter 141, the peak detecting unit 142 makes an update with the current (present) digital value as an extreme value together with its position information when the current digital value has changed from the prior digital value. When the current digital value matches the prior digital value, the peak detecting unit 142 acquires the intermediate position (the midpoint position in this embodiment as described later) between the position of the current digital value and the position of the prior digital value as the current extreme value position, holds the matching digital value as an extreme value and updates the position information with the intermediate position information.

Equipped with this function, the peak detecting unit 142 can prevent a read error even with a card MC with shifted peak points.

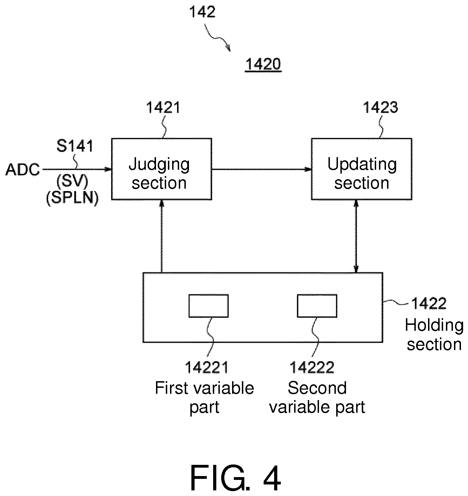

FIG. 4 is a block diagram showing a configuration example of a judgment-update processing section of extreme values and their position information, provided at the peak detecting unit of this embodiment for a read error countermeasure.

In FIG. 4, the judgment-update processing section 1420 of the peak detecting unit 142 has a judging section 1421, a holding section 1422 and an updating section 1423.

Receiving the digital value SV of the digital signal S141 from the AD converter 141, the judging section 1421 judges whether the current digital value PostSV has changed from the prior digital value PreSV (whether the current value has become larger or smaller), referring to the held data at the holding section 1422, and outputs the judgment result to the updating section 1423.

The peak detecting unit 142 has a function of holding the inputted and necessary digital values (including their position information) and the determined peak values in a registry and/or memory, etc. which are not illustrated in the figure. The holding section 1422 is configured capable of holding the digital values SV of the digital signal S141 from the AD converter 141 as the extreme values together with their position information (SPLN, for example).

The holding section 1422, for example, is configured including a first variable part 14221, which is capable of holding an extreme value (the maximum MAX or the minimum MIN) corresponding to the prior digital value PreSV together with its position information PreT, and a second variable part 14222, which is capable of holding the extreme value corresponding to the current digital value PostSV together with its position information PostT. For example, the first variable part 14221 and the second variable part 14222 respectively store a variable PeakA and a variable Peak B of peaks.

When the judgment result of the judging section 1421 indicates that the current digital value PostSV has changed from the prior digital value (any preceding extreme value) PreSV, the updating section 1423 updates the extreme value and its position information held in the holding section 1422 with the current digital value PostSV as an extreme value MAX or MIN and its position information PostT. In this case, the updating section 1433 makes an update with the extreme MAX or MIN, and the peak position PeakTsum which is judged as the latest extreme value is updated with PeakPostT for updated position information.

When the judgment result of the judging section 1421 indicates that the current digital value PostSV matches the prior digital value PreSV, the updating section 1423 acquires a midpoint position {(PreT + PostT) / 2} between the peak position PostT of the current digital value PostSV and the peak position PreT of the prior digital value PreSV as the current extreme value position, holds the matching digital value PostSV or PreSV as an extreme value and updates the position information with the midpoint position information {(PreT + PostT) / 2}.

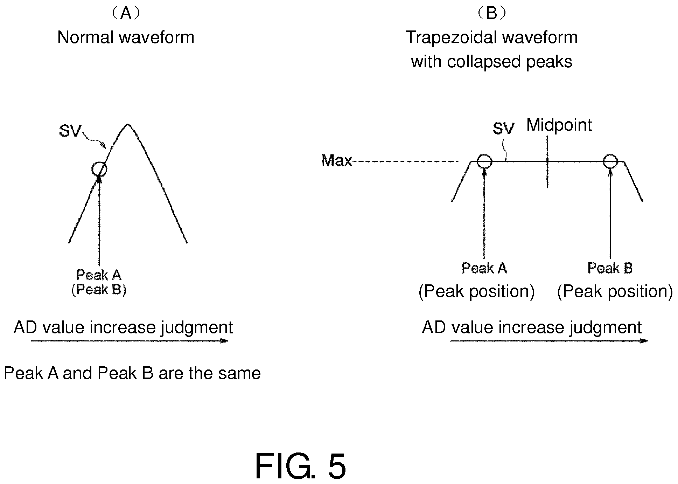

(A) and (B) of FIG. 5 shows diagrams to explain an example of an information update processing by the updating section of this embodiment. (A) of FIG. 5 is a diagram to explain the update processing on a normal waveform in which there is no peak shift; (B) of FIG. 5 is a diagram to explain the update processing on a trapezoidal waveform with collapsed peaks due to a peak shift.

Associating with the holding section 1422 of FIG. 4, when the judgment result of the judging section 1421 indicates that the current digital value PostSV has changed from the prior digital value PreSV, the updating section 1423 updates the first variable part 1422 and the second variable part 14222 with the current digital value PostSV as an extreme value (a maximum value MAX in the example of (A) of FIG. 5). For example, the variable PeakB which is obtained at the prior update replaces the variable PeakA.

For a normal waveform in which there is no peak shift as shown in (A) of FIG. 5, the variable PeakB itself is assigned for the variable PeakA when the digital value SV from the AD converter 141 is on the increase. In other words, while the digital values SV are on the increase, an update is made with the current (present) sampling value as a maximum value MAX and the variable PeakA and the variable PeakB are simultaneously updated.

For a waveform with collapsed peaks due to peak shifts as shown (B) of FIG. 5, if the maximum value MAX matches the digital value SV while it is judged that the digital value SV is on the increase, it means that the prior digital value PreSV and the current digital value PostSV match each other; therefore, it is judged that the waveform is a trapezoidal shape with collapsed peaks. In the case of the trapezoidal waveform, PeakB is the same value as the variable PeakA (the maximum value MAX) and is at the position which has passed by a certain time from the variable Peak A.

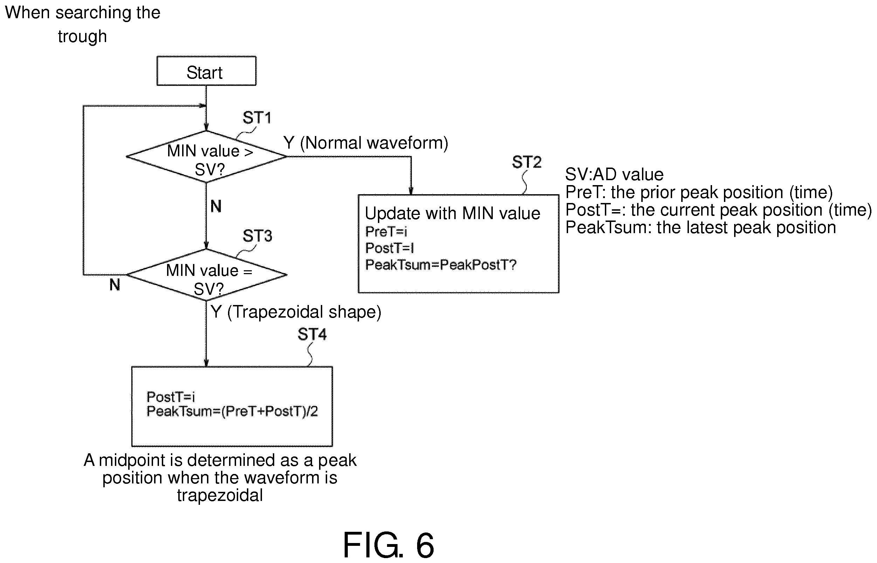

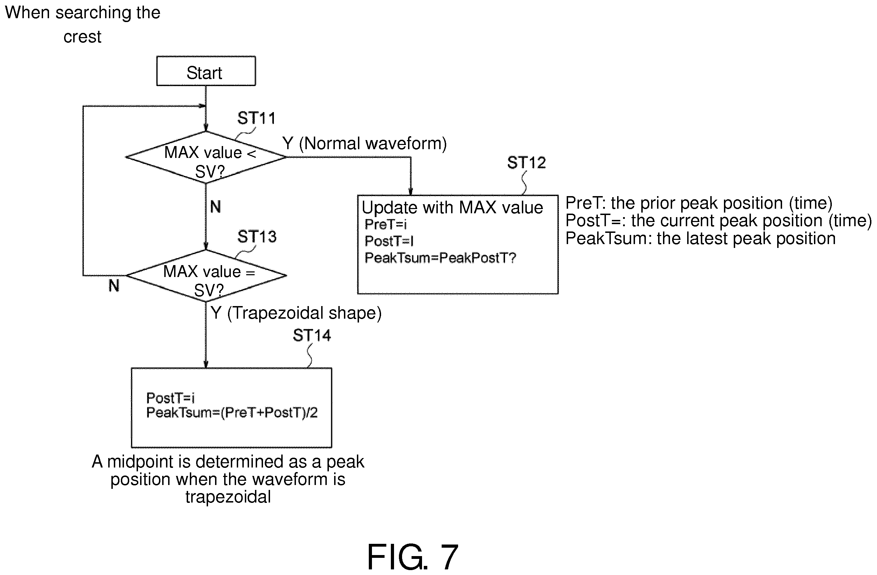

FIG. 6 and FIG. 7 are respectively a flowchart to explain a processing to distinguish if the signal is a normal waveform or an abnormal, trapezoidal waveform and to update information at the time of the peak point detection processing. FIG. 6 explains a processing used when the value of the first peak as a judgment subject is a peak value on the minimum value side (the trough side); FIG. 7 explains the processing used when the value of the first peak as a judgment subject is a peak value on the maximum value side (the crest side).

(When the Value of First Peak as a Judgment Subject is a Peak Value on the Minimum Value side (on the Trough Side))

As shown in FIG. 6, the judging section 1421 judges whether the digital value SV from the AD converter 141 is smaller than the minimum value MIN or not (Step ST1). When it is judged in Step ST1 that the digital value SV is smaller than the minimum value MIN, the updating section 1423 judges that the current digital value has changed from the prior digital value (any preceding extreme value) PreSV and therefore the waveform is normal, and then the minimum value MIN and its position information held in the holding section 1422 is updated with the current digital value PostSV as a minimum value MIN and its position information PostT (Step ST2). In this case, in the updating section 1433, an update is made with the minimum value MIN, and the latest peak position PeakTsum is updated with PeakPostT for the position information.

When it is judged in Step ST1 that the digital value SV is not smaller than the minimum value MIN, the judging section 1421 judges whether the digital value SV from the AD converter 141 is equal to the minimum value MIN or not (Step ST3). When it is determined in Step ST3 that the digital value SV is equal to the minimum value MIN, the updating section 1423 judges that the waveform is in a trapezoidal shape with collapsed peaks, and the process proceeds to Step ST4. In Step ST4, the midpoint position {(PreT + PostT) / 2} between the peak position PostT of the current digital value PostSV and the peak position PreT of the prior digital value PreSV is acquired as the current extreme value position, the matching digital value PostSV or PreSV is held as an extreme value, and the position information is updated with the midpoint position information {(PreT + PostT) / 2}.

(When the Value of the First Peak as a Judgment Subject is a Peak Value on the Maximum Value Side (on the Crest Side))

As shown in FIG. 7, the judging section 1421 judges whether the digital value SV from the AD converter 141 is larger than the maximum value MAX or not (Step ST11). When it is judged in Step ST11 that the digital value SV is larger than the maximum value MAX, the updating section 1423 judges that the current digital value PostSV has changed from the prior digital value (any preceding extreme value) PreSV and therefore the waveform is a normal one, and then the maximum value MAX and its position information held in the holding section 1422 is updated with the current digital value PostSV as a maximum value MAX and its position information PostT (Step ST12). In this case, in the updating section 1433, an update is made with the maximum value MAX, and the latest peak position PeakTsum is updated with PeakPostT for the position information.

When it is judged in Step ST11 that the digital value SV is not larger than the maximum value MAX, the judging section 1421 judges whether the digital value SV from the AD converter 141 is equal to the minimum value MAX or not (Step ST13). If it is determined in Step ST13 that the digital value SV is equal to the maximum value MAX, the updating section 1423 judges that the waveform is in a trapezoidal shape with collapsed peaks and implements the processing of Step ST14. In Step ST14, the midpoint position {(PreT + PostT) / 2} between the peak position PostT of the current digital value PostSV and the peak position PreT of the prior digital value PreSV is acquired as the current extreme value position, the matching digital value PostSV or PreSV is held as an extreme value, and the position information is updated with the midpoint position information {(PreT + PostT) / 2}.

As described above, the peak detecting part 142 acquires time intervals TIV12 - TIV89, ⋯ as the time interval information, taking two consecutive peak points for each interval as shown in (C) and (D) of FIG. 2.

In the example of FIG. 2, the peak detecting unit 142 acquires the time interval between the peak point PK1 and the peak point PK2 as time interval TIV12. The time interval between the peak point PK2 and the peak point PK3 is acquired as time interval TIV23. The time interval between the peak point PK3 and the peak point PK4 is acquired as time interval TIV34. The time interval between the peak point PK4 and the peak point PK5 is acquired as time interval TIV45. The time interval between the peak point PK5 and the peak point PK6 is acquired as time interval TIV56. The time interval between the peak point PK6 and the peak point PK7 is acquired as time interval TIV67. The time interval between the peak point PK7 and the peak point PK8 is acquired as time interval TIV78. The time interval between the peak point PK8 and the peak point PK9 is acquired as time interval TIV89.

The peak detecting unit 412, then, outputs the information of the acquired time intervals TIV (12 to 89, ⋯) together with the peak point information to the F2F signal generating unit 143 which is the information generating unit.

[Basic Peak Detecting Method by Peak Detecting Unit 142]

A more concrete processing example of peak detection at the peak detecting unit 142 is described hereinafter. The peak detecting unit 142 first judges the magnetic data, which is converted to digital data by the AD converter 141, by an initial threshold (a judgment level) JVL and determines a peak when the digital value exceed a judgment level JVL.

The peak detecting unit 142 acquires the next judgment level JVL from the prior peak value. More specifically described, it acquires a value (a correction value, level) by multiplying the differential value PtoP = Max - Min, which is obtained by subtracting the trough digital value (Min) from the crest digital value (Max) in the waveform, by a certain ratio based on the difference, and sets the value, which is obtained by adding (or subtracting) the correction value $\alpha$ to (or from) the midpoint value VCT between the digital value (Max) and the digital value (Min), as the next judgment level JVL.

[Formula 1]

$$\text{The judgment level } JVL = VCT \pm PtoP * C = VCT \pm \alpha$$

where C is a constant; C is set as $C = 1/2^n$ where $1/2^5 = 1/32$, for example.

The judgment level is automatically set by the above formula. Therefore, a card MC with low output (also called a demagnetized card) and a card with high output both can be read. In other words, the peak detecting unit 142 automatically sets a judgment level (a detection threshold) on the waveform at the time of peak detection, by following the output level of the AD converter 141. With this, a card MC with fluctuated output can be read without the need to switch circuits.

[Peak Detecting Method with More Precise Accuracy of Peak Detecting Unit 142]

When reading a card MC with a log of noises, the peak detecting unit 142 of this embodiment judges whether not one, but two peak points exceed a judgment level (a threshold) to determine if the value is a peak value. In this case, the peak detecting unit 142 automatically sets an intermediate value VCT of the difference between the judgment level (the detection threshold, the slicing value) JVL on the waveform at the time of peak detection and the peak value, by following the output level of the AD converter 141.

To determine the peak value of the first peak value VP1 (B, T) as a judgment subject, the peak detecting unit 142 implements a computation processing using the second peak value VP2 and the third peak value VP3, which are respectively the prior and the second prior to the value of the first peak value VP1 (B, T), and further, the fourth peak value VP4 (B, T) which is the post peak value after the first peak value VP1 (B, T). For this, the peak detecting unit 142 is equipped with a function of holding the inputted, necessary digital values and the determined peak values in the holding section such as a registry or a memory.

The peak detecting unit 142 acquires a first correction value $\alpha 1$ or $\alpha 11$ by multiplying the difference (VP3 - VP2) between the third peak value VP3 and the second peak value VP2 by a predetermined ratio C (=$1/2^n$) based on the difference (the absolute value of the difference). In parallel at that time, the peak detecting unit 142 acquires and sets a first intermediate value VCT1 or VCT11 between the second peak value VB2 and the third peak value VP3. Then, the peak detecting unit 142 adds the first correction value $\alpha 1$ or all to the first intermediate value VCT1 or VCT11 between the third peak value VP3 and the second peak value VP2; more specifically, the peak detecting unit 142 adds the correction value when the subject peak is on the maximum value side or subtracts the correction value when the subject peak is on the minimum value side to acquire and set a first judgment level (a threshold) JVL1 or JVL11. Further, the peak detecting unit 142 acquires and sets a second correction value $\alpha 2$ or $\alpha 12$ by multiplying the difference (VP2 - VP1) between the second peak value VP2 and the first peak value VP1 by a predetermined ratio C (=$1/2^n$) based on the difference (the absolute value of the difference). In parallel at that time, the peak detecting unit 142 acquires and sets a second intermediate value VCT2 or VCT12 between the second peak value VP2 and the first peak value VP1. Then, the peak detecting unit 142 adds the second correction value $\alpha 2$ or $\alpha 12$ to the second intermediate value VCT2 or VCT12 between the second peak value VP2 and the first peak value VP1; more specifically, the peak detecting unit 142 adds the correction value when a subject peak is on the maximum value side or subtract the correction value when a subject peak is on the minimum value side to acquire and set a second judgment level (a threshold) JVL2, JVL12. Then, the peak detecting unit 142 confirms that the value of the digital signal exceeds the first intermediate value VCT1, VCT11 and the first judgment level (the threshold) JVL1, JVL12, which have been set, and also exceeds the second intermediate value VCT2, VCT12 and the second judgment level (the threshold) JVL2, JVL12, which have been set.

The peak detecting unit 142 confirms that the digital value corresponding to the second peak value VP2 exceeds the first intermediate value VCT1, VCT11 and the first threshold JVL1, JVL11 and that the digital value corresponding to the post peak value VP4 exceeds the second intermediate value VCT2 or VCT12 and the second threshold JVL2 or JVL12 to determine the first peak value VP1.

In the reproduced signal, peak values alternately exist on the maximum value side (the crest side) and the minimum value side (the trough side) having an intermediate point between them. In detection of peaks in such a signal, the peak detecting unit 142 sets the position of the judgment level JVL1, JVL2, JVL11, JVL12 with respect to the intermediate value VCT1, VCT2, VCT11, VCT12 differently depending on when the value of the first peak as a judgment subject is a peak value on the minimum value side (on the trough side) or when it is a peak value on the maximum value side (on the crest side). The peak detecting unit 142 sets the first and the second judgment levels (the thresholds) JVL1 and JVL2 more toward the maximum value side from the first and second intermediate values VCT1 and VCT2 when the value of the first peak as a judgment subject is a peak value on the minimum value side. In other words, when the value of the first peak as a judgment subject is a peak value on the minimum value side (the trough side), the peak detecting unit 142 adds the first correction value $\alpha 1$ to the first intermediate value VCT1 and adds the second correction value $\alpha 2$ to the second intermediate value VCT2 to set the first and second judgment levels (the thresholds) JVL1 and JVL2 more toward the maximum value side from the first and second intermediate values VCT1 and VCT2. When the value of the first peak as a judgment subject is a peak value on the maximum value side (the crest side), the peak detecting unit 142 sets the first and second judgment levels (the thresholds) JVL11, JVL12 more toward the minimum value side from the first and second intermediate values VCT11 and VCT12. In other words, when the value of the first peak as a judgment subject is a peak value on the maximum value side (the crest side), the peak detecting unit 142 subtracts the first correction value all from the first intermediate value VCT11 and subtracts the second correction value $\alpha 12$ from the second intermediate value VCT12 to set the first judgment level (the thresholds) JVL11, JVL12 more toward the minimum value side from the first and second intermediate values VCT11 and VCT12.

The peak value decision processing is described referring to (A) and (B) of FIG. 3.

[Peak Detecting Method Used When the Value of First Peak as a Judgment Subject is a Peak Value on the Minimum Value Side (the Trough Side)]

First, the peak detecting method used when the value of the first peak as a judgment subject is a peak value on the minimum value side (on the trough side) is described referring to (A) of FIG. 3.

When the value of the first peak value VP1B as a judgment subject is a peak value on the minimum value side, the peak detecting method 142 takes the second peak value VP2T and the third peak value VP3B which are respectively the prior value on the maximum value side and the second prior value on the minimum value side of the first peak value VP1B, and the fourth peak value which is the post value after the first peak value VP1B for judgment. The peak detecting unit 142 acquires a first correction value $\alpha 1$ by multiplying the difference (VP3B - VP2T) between the third peak value VP3B and the second peak value VP2T by a ratio C1 (=$1/2^n$) based on the difference. In parallel at that time, the peak detecting unit 142 acquires and sets the intermediate value VCT1 between the second peak value VP2T and the third peak value VP3B. Then, the peak detecting unit 142 adds the first correction value $\alpha 1$ to the first intermediate value VCT1 between the third peak value VP3B and the second peak value VP2T to acquire and set a first judgment level (a threshold) JVL1. The peak detecting unit 142 sets the first judgment level JVL1 more toward the maximum value side (the crest side) from the first intermediate value VCT1 between the second peak value VP2T and the third peak value VP3B. The peak detecting unit 142 judges whether the value of the digital signal from the AD converter 141 exceeds the first intermediate value VCT1 and the first judgment level JVL1 which have been set.

Further, the peak detecting unit 142 acquires and sets a second correction value $\alpha 2$ by multiplying the difference (VP2T - VP1B) between the second peak value VP2T and the first peak value VP1B by a ratio C12 (=$1/2^n$) based on the difference. In parallel at that time, the peak detecting unit 142 acquires and sets the second intermediate value VCT2 between the second peak value VP2T and the first peak value VP1B. Then, the peak detecting unit 142 adds the second correction value $\alpha 2$ to the second intermediate value VCT2 between the second peak value VP2 and the first peak value VP1 to acquire and set a second judgment level (the threshold) JVL2. The peak detecting unit 142 sets the second judgment level JVL2 more toward the maximum value side (the crest side) from the second intermediate value VCT2 between the second peak value VP2T and the first peak value VP1B. The peak detecting unit 142 judges whether the value of the digital signal from the AD converter 141 exceeds the second intermediate value VCT2 and the second judgment level JVL2 which have been set. Then, the peak detecting unit 142 confirms that the value of the digital signal exceeds the first intermediate VCT1 and the first judgment level JVL1, which have been set, and exceeds the second intermediate value VCT2 and the second judgment level JVL2, which have been set.

The confirmation that the digital value exceeds the first intermediate value VCT1 and the first judgment level JVL1 and the confirmation that the digital value exceeds the second intermediate value VCT2 and the second judgment level JVL2 may be implemented continually or separately after each setting processing.

As shown in (A) of FIG. 3, the peak detecting unit 142 confirms whether the value of the digital signal have changed (increased) discretely from the third peak value VP3B to the second peak value VP2T and exceed the first intermediate value VCT1 and the first judgment level JVL1. Further, the peak detecting unit 142 confirms the first peak value VP1 at the point TEU2 when, after having changed (increased) discretely from the first peak value VP1B to the next peak value (VP4T), the digital value exceeds the second intermediate value VCT2 and the second judgment level JVL2.

[Peak Detecting Method Used When the Value of First Peak as a Judgment Subject is a Peak Value on the Maximum Value Side (the Crest Side)]

Next, the peak detecting method used when the value of the first peak value as a judgment subject is a peak value on the maximum value side (on the crest side) is described referring to (B) of FIG. 3.

When the value of the first peak value VP1T as a judgment subject is a peak value on the maximum value side, the peak detecting unit 142 takes the second peak value VP2B and the third peak value VP3T, which are respectively the prior value on the minimum value side and second prior value on the maximum value side, and the fourth peak value VP4B which is the post value of the first peak value VP1T for judgment. The peak detecting unit 142 acquires a first correction value $\alpha 11$ by multiplying the difference (VP3T - VP2B) between the third peak value VP3T and the second peak value VP2B by a ratio C11 (=$1/2^n$) based on the difference. In parallel at that time, the peak detecting unit 142 acquires and sets the first intermediate value VCT11 between the second peak value VP2B and the third peak value VP3T. Then, the peak detecting unit 142 subtracts the first correction value $\alpha 11$ from the first intermediate value VCT11 between the third peak value VP3T and the second peak value VP2B to acquire and set a first judgment level (the threshold) JVL11. The peak detecting unit 142, then, sets the first judgment level JVL11 more toward the minimum value side (the trough side) from the first intermediate value VCT11 between the second peak value VP2B and the third peak value VP3T. The peak detecting unit 142 judges whether the value of the digital signal from the AD converter 141 exceeds the first intermediate value VCT11 and the first judgment level JVL11 which have been set.

Further, the peak detecting unit 142 acquires a second correction value $\alpha 12$ by multiplying the difference (VP2TB- VP1T) between the second peak value VP2B and the first peak value VP1T by a ratio C12 (=$1/2^n$) based on the difference (the absolute value of the difference). In parallel at that time, the peak detecting unit 142 acquires and sets the second intermediate value VCT12 between the second peak value VP2B and the first peak value VP1T. Then, the peak detecting unit 142 subtracts the second correction value $\alpha 12$ from the first intermediate value VCT12 between the second peak value VP2B and the first peak value VP1T to acquire and set the second judgment level (the threshold) JVL12. The peak detecting unit 142 sets the second judgment level JVL12 more toward the minimum value side (the trough side) from the second intermediate value VCT12 between the second peak value VP2B and the first peak value VP1T. The peak detecting unit 142 judges whether the value of the digital signal from the AD converter 141 exceeds the second intermediate value VCT12 and the second set judgment level JVL12. Then, the peak detecting unit 142 confirms that the value of the digital signal exceeds the first intermediate VCT11 and the first judgment level JVL11 which have been set, and also exceeds the second intermediate value VCT12 and the second judgment level JVL12 which have been set.

The confirmation that the digital value exceeds the first intermediate value VCT11 and the first judgment level JVL11 and the confirmation that the digital value exceeds the second intermediate value VCT12 and the second judgment level JVL12 may be implemented continually or separately after each setting processing.

As shown in (B) of FIG. 3, the peak detecting unit 142 confirms whether the value of the digital signal has changed (decreased) discretely from the third peak value VP3T to the second peak value VP2B and exceeds the first intermediate value VCT11 and the first judgment level JVL11. Further, the peak detecting unit 142 confirms the first peak value VP1T at the point TEU12 when, after having changed (decreased) discretely from the first peak value VP1T toward the next peak value (VP4B), the digital value exceeds the second intermediate value VCT12 and the second judgment level JVL12.

The peak detecting unit 142 has been described in detail as above. Next, the configuration and function of the F2F signal generating unit 143 which is an information generating unit is described.

The F2F signal generating unit 143 generates a rectangular wave signal of the reproduced signal, which is waveform-shaped according to a time interval TIV which is time interval information of peak points detected by the peak detecting unit 142. Triggered by the information of a peak point, the F2F signal generating unit 143 inverts the generating signal level from the first level LVL1 to the second level LVL2 or from the second level LVL2 to the first level LVL1. For example, the first level LVL1 is a level corresponding to a logic "1" and the second level LVL2 is a level corresponding to a logic "0". Note that they may be the opposite. The F2F signal generating unit 143 maintains the generating signal level at the second level LVL2 or the first level LVL1 until the time interval TIV between the triggering peak point and the peak point is complete. When the time interval TI between the peak points is complete, the F2F signal generating unit 143 inverts the generating signal level from the second level LVL2 to the first level LVL1 or from the first level LVL1 to the second level LVL2.

For the F2F signal generation, the F2F signal generating unit 143 compares the time interval signal acquired from the two consecutive peak points with the counting value of an internal counter 1431, which counts the time measuring result of a timer 144 and inverts the F2F signal output when the comparison matches. For example, when a certain time interval data b is inputted and the immediately-prior time interval data at the time of the output inversion of the F2F signal is a, the next inversion time is expressed by (a+b). If this formula is directly applied, a time difference may occur between the inputted interval time and the output timing of the F2F signal, possibly causing an abnormal output. To prevent this, the F2F signal generating unit 143 is equipped with a buffer 1432 that includes a function of time adjustment. The buffer size is 16 words (16 * 16 bit).

The F2F signal generating operation at the F2F signal generating unit 143 is described referring to FIG. 2. First, triggered by the information of the peak point PK1, the signal is inverted (switched) from the first level LVL1 to the second level LVL2. During the time interval TIV12 between the peak point PK1 and the next peak point PK2, the output signal level is held at the second level LVL2, which is the inverted level.

When the counting value of the internal counter 1431 fulfills the time interval TIV12 counted from the trigger point while monitoring the timer 144, the output signal level is inverted from the second level LVL2 to the first level LVL1. During the time interval TIV23 between the peak point PK2 and the next peak point PK3, the output signal level is held at the first level LVL1 which is the inverted level.

When the counting value of the internal counter 1431 fulfills the total period of the time intervals TIV12 and TIV23 (TIV12 + TIV23) counted from the trigger point while monitoring the timer 144, the output signal level is inverted from the first level LVL1 to the second level LVL2. During the time interval TIV34 between the peak point PK3 and the next peak point PK4, the output signal level is held at the second level LVL2 which is the inverted level.

When the counting value of the internal counter 1431 fulfills the total period of the time interval TIV12, TIV23 and TIV34 (TIV12 + TIV23 + TIV34) counted from the trigger point while monitoring the timer 144, the output signal level is inverted from the second level LVL2 to the first level LVL1. During the time interval TIV45 between the peak point PK4 and the next peak point PK5, the output signal level is held at the first level LVL1 which is the inverted level.

When the counting value of the internal counter 1431 fulfills the total period of the time interval TIV12, TIV23, TIV34 and TIV45 (TIV12 + TIV23 + TIV34 + TIV45) counted from the trigger point while monitoring the timer 144, the output signal level is inverted from the first level LVL1 to the second level LVL2. During the time interval TIV56 between the peak point PK5 and the next peak point PK6, the output signal level is held at the second level LVL2 which is the inverted level.

When the counting value of the internal counter 1431 fulfills the total period of the time interval TIV12, TIV23, TIV34, TIV45 and TIV56 (TIV12 + TIV23 + TIV34 + TIV45 + TIV56) counted from the trigger point while monitoring the timer 144, the output signal level is inverted from the second level LVL2 to the first level LVL1. During the time interval TIV67 between the peak point PK6 and the next peak point PK7, the output signal level is held at the first level LVL1 which is the inverted level.

When the counting value of the internal counter 1431 fulfills the total period of the time interval TIV12, TIV23, TIV34, TIV45, TIV56 and TIV67 (TIV12 + TIV23 + TIV34 + TIV45 + TIV56 + TIV67) counted from the trigger point while monitoring the timer 144, the output signal level is inverted from the first level LVL1 to the second level LVL2. During the time interval TIV78 between the peak point PK7 and the next peak point PK8, the output signal level is held at the second level LVL2 which is the inverted level.

When the counting value of the internal counter 1431 fulfills the total period of the time interval TIV12, TIV23, TIV34, TIV45, TIV56, TIV67 and TIV78 (TIV12 + TIV23 + TIV34 + TIV45 + TIV56 + TIV67 + TIV78) counted from the trigger point while monitoring the timer 144, the output signal level is inverted from the second level LVL2 to the first level LVL1. During the time interval TIV89 between the peak point PK8 and the next peak point PK9, the output signal level is held at the first level LVL1 which is the inverted level.

At the F2F signal generating unit 143, an F2F signal is generated and outputted to the demodulation circuit 145 through the above processing.

The F2F signal generating unit 143 is configured including a FIFO (First In First Out) as a buffer. When a FIFO overwrite occurs before the F2F signal completely outputs the data because of an error detection, the F2F signal generating unit 143 outputs an overflow error OFE. On the other hand, when the counting value of the internal counter 1431 has passed the expected time at the time of interval data update, the F2F signal generating unit 143 outputs an underflow error UFE. The F2F signal generating unit 143 outputs the overflow error OFE or underflow error UFE to the demodulation circuit 145 or directly to the host device 15 through the demodulation circuit 145.

The demodulation circuit 145 converts the F2F signal generated at the F2F signal generating unit 143 to binary "0", "1" data and forwards it to the host device 15. When a next level inversion (a bit inversion) exists within 3/4 T (or 5/7T, 5/8T, etc. may be applied) where T is the width of the prior bit which has already been judged to "0" or "1", the demodulation circuit 145 judges a current bit to a logic "1". The demodulation circuit 145 judges a bit to a logic "0" when there is no next level inversion within 3/4T. In the above manner, receiving the F2F signal which has already been generated at the F2F signal generating unit 143, the demodulation circuit 145 converts the signal to binary "0", "1" data; therefore, its configuration can greatly be simplified, compared to the configuration in which the detection data from the peak detecting unit is demodulated.

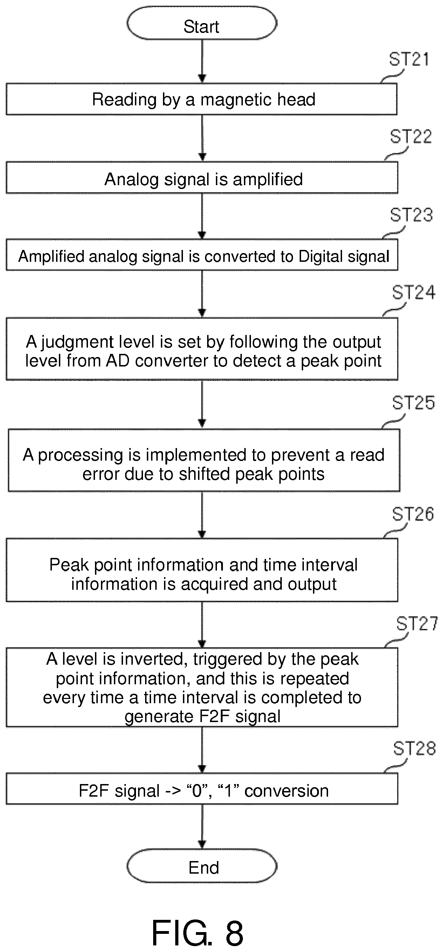

Next, an overall operation of a card reader 10 which has the above described configuration is described referring to the flowchart of FIG. 8.

As a card MC is moved relative to a magnetic head (HD), an analog signal S11 is output from the magnetic head 11 (ST21) and amplified to an appropriate value (level) by a differential amplifier circuit 12 of an operation amplifier (ST22). The amplified analog signal S12 is inputted to the AD converter 141 to be converted to a digital signal (ST23). The digital signal from the AD converter 141 is outputted as a signal S141 to the peak detecting unit 142. At that time, the output from the AD converter 141 includes position (time) information, composed of sampling numbers SPLN accompanying the sampling processing, and a value of each sampling point SV (n), ⋯, (n+4), ⋯.

Receiving the output digital signal S141 from the AD converter 141, the peak detecting unit 142 detects peak points corresponding to extreme values (maximum values and minimum values) of the magnetic data (ST24). The peak detecting unit 142 automatically sets a detection threshold, which is a judgment level, on the waveform at the time of peak detection, by following the output level of the AD converter 141. With this, a card MC whose output fluctuates can be read without the need to switch circuits. The peak detecting unit 142 first judges the magnetic data converted to the digital data with an initial judgment level (threshold) and determines a peak when it exceeds the judgment level. The next judgment level is acquired from the prior peak values. More specifically described, a value (a correction value, level) $\alpha$ is acquired by multiplying the value PtoP = Max - Min, which is obtained by subtracting the digital value at the trough (Min) from the digital value at the crest (Max), by a certain ratio C (= $1/2^n$), and the correction value $\alpha$ is added to or subtracted from the intermediate value VCT between the digital value (Max) and the digital value (Min) to acquire a value (level) as a judgment level JVL which is automatically set.

The peak detecting process 142 implements the following processing (ST25) to prevent a read error on a card MC that produces shifted peak points is described referring to FIG. 4 through FIG. 7.

Receiving a digital value SV of the digital signal S141 from the AD converter 141, the peak detecting unit 142 refers the data held in the holding section 1422 to judge whether the current digital value PostSV has changed (increased or decreased) from the prior digital value PreSV and outputs the judgment result to the updating section 1423.

When the judgment result of the judging section 1421 indicates that the current digital value PostSV has changed from the prior digital value (any preceding extreme value), the updating section 1423 updates the extreme value and its position information held in the holding section 1422 with the current digital value PostSV as an extreme value MAX or MIN and its position information Post T. In this case, the updating section 1433 makes an update with the extreme value MAX or MIN, and the latest peak position PeakTsum is updated with PeakPostT for the position information.

When the judgment result of the judging section 1421 indicates that the current digital value PostSV matches the prior digital value PreSV, the updating section 1423 judges that the waveform is in a trapezoidal shape with collapsed peaks, and therefore, acquires the midpoint position {(PreT + PostT) / 2} between the peak position Post T of the current digital value Post SV and the peak position PreT of the prior digital value PreSV as the current extreme position, holds the matching digital value Post SV or PreSV as an extreme value and updates the position information with the midpoint position information {(PreT + PostT)/2}.

With the above function, the peak detecting unit 142 can prevent a read error even on a card with shifted peak points.

Then, the peak detecting unit 142 acquires the time interval information TIV between the peak points acquired from the information of the multiple peak points and outputs the signal S142 including the peak point information and the interval information TIV to the F2F signal generating unit 143 (ST26).

Triggered by the information indicating a peak point, the F2F signal generating unit 143 inverts the signal level and repeats this as the signal reaches a time interval, and theF2F signal is generated by inverting the signal level (ST27). In a F2F signal generation, the F2F signal generating unit 143 compares the time interval signal acquired from the two successive peak points with the counting value of the internal counter 1431 which counts the time measuring result by the timer 144; when the values match each other, the F2F signal output [level] is inverted. As described above, for example, when a certain time interval data b is inputted and the immediately-prior time interval data at the time of the output inversion of the F2F signal is a, the next inversion time is expressed by (a+b). At that time, the buffer 1432 makes time adjustment if a time difference has occurred between the inputted interval time and the F2F signal outputting timing, to make a normal output.

The F2F signal generated at the F2F signal generating unit 143 is converted to binary "0", "1" data by the demodulation circuit 145 and forwarded to the host device 15 (ST28).

(Example of Modification)

Note that the following circuit added to the digital reproduction processing circuit 14 that includes the peak detecting unit can improve performance.

As indicated by a broken line in FIG. 1, at least either a digital filter 146 or a moving averaging unit 147 may be arranged between the output by the AD converter 141 and the peak detecting unit 142:

(1) For example, a digital filter 146 is arranged on the output stage of the AD converter 141 to digitally filter digital data after AD conversion and before peak detection for noise removal;
(2) For example, a moving averaging unit 147 is arranged on the output stage of the AD converter 141 to take a moving average of the magnetic data and smoothen it after AD conversion for noise removal;
(3) For example, the digital filter 146 and the moving averaging unit 147 are arranged on the output stage of the AD converter 141 to first digitally filter the magnetic data after the AD conversion and then take a moving average of the data.

Also, a noise impulse removing unit 148, for example, is arranged on the output stage of the peak detecting unit 142 to remove noise pulses which are shorter than a normal interval of the F2F signal. For example, pulses which are less than a fraction of the interval of the F2F signal are removed.

As described before, the differential amplifier circuit 12 implements an automatic gain control on the gain. At that time, the differential amplifier circuit 12 differentially amplifies the analog signal S11 which is produced by reproducing the magnetic head 11 according to the peak detection information at the peak detection unit 142 of the digital reproduction processing circuit 14. The differential amplifier 12 implements a gain control to set the amplitude of the signal to 1/4 of a full range.

(Major Effect of This Embodiment)

As described above, the card reader 10 is equipped with the peak detecting unit 142 which, upon receiving a digital value SV of a digital signa S141 from the AD converter 141, detects peak points corresponding to the positions of extreme values maximum values or minimum values) of the reproduced signal according to whether the inputted digital value exceeds a threshold JVL, which is a judgment level set from the digital signal by following the output of the AD converter 141. The peak detecting unit 142 has the judging section 1421 which, upon receiving the digital value SV of the digital signal S141 from the AD converter 141, judges whether the current digital value has changed from the prior digital value, the holding section 1422 capable of holding a digital value of the digital signal from the AD converter 141 as an extreme value and its position information, and the updating section 1423 which, when the judgment result of the judging section 1421 indicates that the current digital value has changed from the prior digital value, updates the extreme value and its position information held in the holding section 1422 with the current digital value as a new extreme value and its position information or, when the current digital value matches the prior digital value, acquires an intermediate position between the position of the current digital value and the position of the prior digital value as the position of a current extreme value, holds the matching digital value as the extreme value, and updates the position information with the intermediate position information.

Therefore, the card reader 10 can prevent a read error even on a card MC with shifted peak points.

Also, when the current digital value and the prior digital value match each other, the updating section 1423 acquires the midpoint position between the position of the current digital value and the position of the prior digital value, holds the matching digital value as the extreme value and updates the position information with the information of the midpoint position.

Accordingly, in the card reader 10, when the current digital value matches the prior digital value, the midpoint between the time position of the prior digital value and the time position of the current digital value is acquired; an ideal waveform at that time is laterally symmetrical and therefore, this mid-point can be regarded as an original peak point. Because of this, even a card MC with shifted peak points can be read without a read error.

Also, the holding section 1422 is provided with a first variable part 14221 capable of holding an extreme value corresponding to the prior digital value and its position information and a second variable part 14222 capable of holding an extreme value corresponding to the current digital value and its position information. When the judgment result of the judging section 1421 indicates that the current digital value has changed from the prior digital value, the updating section 1423 updates the first variable part 14221 and the second variable part 14222 with the current digital value as an extreme value; when the current digital value and the prior digital value match each other, the updating section 1423 acquires the midpoint position between the position information held in the first variable part 14221 and the position information held in the second variable part as the current extreme value position, holds the matching digital value as an extreme value and updates the position information with the midpoint position information.

With this, when the current digital value matches the prior digital value, the midpoint between the time position of the prior digital value and the time position of the current digital value can easily be acquired by taking an average of the value at the first variable part and the value at the second variable part; since an ideal waveform in this case is laterally symmetrical, this midpoint can be regarded as an original peak point. Because of this, even a card MC with shifted peak points can be read without a read error.

In the digital method peak detection of the first embodiment, a peak detection threshold can automatically be changed according to the output level of the digital signal; therefore, there is no need to switch circuits, the scale for the circuit can be small, and [therefore,] the cost can be reduced. Also, a card with noise or a demagnetized card can be read by one-time reading; therefore, the reading time can be shortened. According to the first embodiment, also, the F2F signal is digitally generated so that a speed measurement or a jitter measurement is possible.

Note that the digital reproduction circuit including the peak detecting unit can be embedded in an FPGA (Field-Programmable Gate Array) or an ASIC (Application Specific Integrated Circuit).

<Second Embodiment>

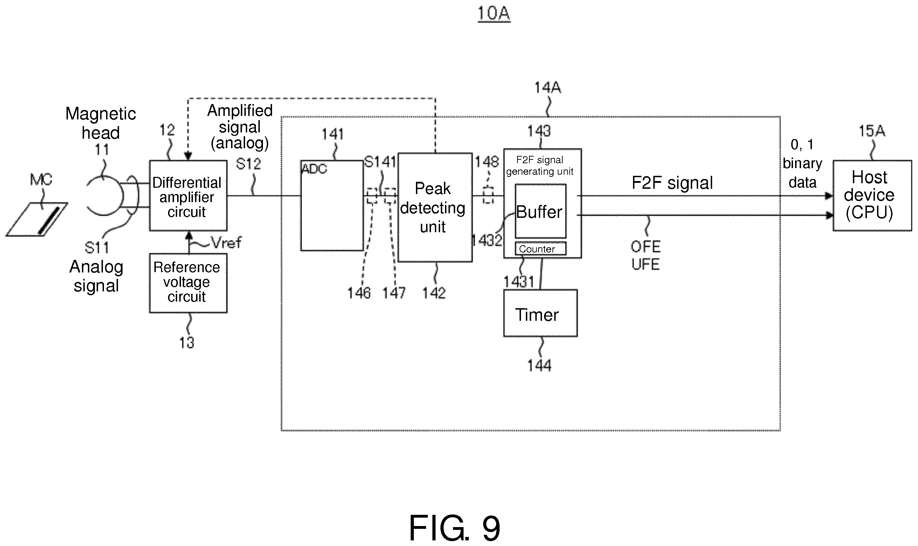

FIG. 9 is a block diagram showing the configuration example of an information reproducing device of Second Embodiment of the present invention.

An information reproducing device 10A of the second embodiment differs from the information reproducing device (card reader) 10 of the first embodiment in that the demodulation circuit is not arranged in the digital reproduction circuit 14A. In the information reproducing device 10A, the function of the demodulation circuit is given to a host device 15.

The rest of the configuration is the same as that of the first embodiment, and the second embodiment can obtain the same effect as that of the above-described first embodiment.

**DESCRIPTION OF REFERENCE NUMERALS**

| 10, 10A | Card reader (Information reproducing device) |
| 11 | Magnetic head |
| 12 | Differential amplifier circuit |
| 13 | Reference voltage circuit |
| 14, 14A | Digital reproduction circuit |
| 141 | Digital analog converter (AD converter: ADC) |
| 142 | Peak detecting unit |
| 1420 | Judgment-update processing section |
| 1421 | Judging section |
| 1422 | Holding section |

| 1423 | Updating section |
|---|---|
| 143 | F2F signal generating section (Information generating section) |
| 144 | Timer |
| 145 | Demodulation circuit |
| 15, 15A | Host device (CPU) |
| MC | Card (Magnetic recording medium) |

**Claims**

1. An information reproducing device, comprising:

   an analog-digital (AD) converter which samples an analog signal produced by reproducing information recorded on a magnetic recording medium, converts the analog signal to a digital signal, and outputs the digital signal together with position information of digital values corresponding to time elapse;
   a peak detecting unit which, upon receiving the digital value of the digital signal produced by the AD converter, detects a peak point corresponding to a position of an extreme value of a reproduced signal according to whether an inputted digital value exceeds a threshold, and the threshold is a judgment level set from the digital signal by following an output of the AD converter; and
   an information generating unit which generates a rectangular waveform signal of the reproduced signal, which is waveform-shaped according to an information of an interval between peaks detected at the peak detecting unit;
   wherein said peak detecting unit comprises:

   a judging section which, upon receiving the digital value of the digital signal produced by the AD converter, judges whether a current digital value has changed from a prior digital value;
   a holding section which holds the digital value of the digital signal produced by the AD converter as an extreme value and its position information; and
   an updating section which, when a judgment result of the judging section indicates that the current digital value has changed from the prior digital value, updates with the current digital value as an extreme value together with its position information, or when the current digital value matches the prior digital value, acquires an intermediate position between a position of the current digital value and a position of the prior digital value as a current extreme value position, holds a matching digital value as an extreme value and updates the position information with an intermediate position information.

2. The information reproducing device as set forth in claim 1, wherein
   when the current digital value matches the prior digital value, the updating section acquires a midpoint position between the position of the current digital value and the position of the prior digital value as a current extreme value position, holds the matching digital value as an extreme value and updates the position information with a midpoint position information.

3. The information reproducing device as set forth in claim 1 or 2, wherein
   the holding section comprises:

   a first variable part capable of holding an extreme value corresponding to the prior digital value and its position information; and
   a second variable part capable of holding an extreme value corresponding to the current digital value and its position information;

   when a judgment result of the judging section indicates that the current digital value has changed from the prior digital value, the updating section updates the first variable part and the second variable part with the current digital value as an extreme value; and
   when the current digital value matches the prior digital value, the updating section acquires a midpoint position between the position information held in the first variable part and the position information held in the second variable part as a current extreme value position, holds the matching digital value as an extreme value, and updates the position information with a midpoint position information.

4. An information reproducing method, comprising:

an analog-digital (AD) converting step in which an analog signal produced by reproducing information recorded on a magnetic recording medium is sampled and converted to a digital signal and the digital signal is output together with the position information of digital values corresponding to time elapse;

a peak detecting step, in which, upon receiving the digital value of the digital signal produced by the AD converting step, a peak point corresponding to a position of an extreme value of a reproduced signal is detected according to whether an inputted digital value exceeds a threshold, and the threshold is a judgment level set from the digital signal by following an output of the AD converting step; and

an information generating step in which a rectangular waveform signal of the reproduced signal, which is waveform-shaped according to an information of an interval between peaks detected at the peak detecting step, is generated;

wherein, in the peak detecting step,

upon receiving the digital value of the digital signal produced by the AD converting step, when a current digital value has changed from a prior digital value, an update is made with the current digital value as an extreme value together with its position information, or when the current digital value matches the prior digital value, an intermediate position between a position of the current digital value and a position of the prior digital value is acquired as a current extreme value position, a matching digital value is held as an extreme value, and the position information is updated with an intermediate position information.

5. The information reproducing method as set forth in claim 4, wherein
in the peak detecting step,
when the current digital value matches the prior digital value, a midpoint position between the position of the current digital value and the position of the prior digital value is acquired as a current extreme value position, the matching digital value is held as an extreme value, and the position information is updated with a midpoint position information.

6. The information reproducing method as set forth in claim 4 or 5, wherein
at the peak detecting step,

a first variable part capable of holding an extreme value corresponding to the prior digital value and its position information, and

a second variable part capable of holding an extreme value corresponding to the current digital value and its position information are included,

when a judgment result of the judging section indicates that the current digital value has changed from the prior digital value, the first variable part and the second variable part are updated with the current digital value as an extreme value,

when the current digital value matches the prior digital value, a midpoint position between the position information held in the first variable part and the position information held in the second variable part is acquired as a current extreme value position, the matching digital value is held as an extreme value, and the position information is updated with a midpoint position information.

FIG. 1

EP 3 522 159 A1

(A) Recording signal

(B) S12 Amplifier reproduction output

VM

PK5          PK7          PK9

SV →    n    n+4  n+8  n+12 n+16
PK1                         PK3 PK4

PK2

(C)                          PK6          PK8

SPLN →   n    n+4  n+8 n+12 n+16 n+20   ∙ ∙ ∙ ∙ ∙

(D)   TIV →    12  | 23 | 34 | 45 | 56 | 67 | 78 | 89

(E) F2F signal                                      LVL1

                                                    LVL2

# FIG. 2

A) When searching a trough

B) When searching a crest

FIG. 3

142

1420

1421                    1423

S141
ADC —
(SV)        Judging            Updating
(SPLN)      section            section

1422
Holding
section

14221        14222
First variable   Second
part        variable part

FIG. 4

（A）
Normal waveform

（B）
Trapezoidal waveform
with collapsed peaks

FIG. 5

When searching the
trough

SV:AD value
PreT: the prior peak position (time)
PostT=: the current peak position (time)
PeakTsum: the latest peak position

A midpoint is determined as a peak
position when the waveform is
trapezoidal

FIG. 6

EP 3 522 159 A1

When searching the
crest

Start

ST11

MAX value <
SV?

Y (Normal waveform)

ST12

N

Update with MAX value
PreT=i
PostT=I
PeakTsum=PeakPostT?

PreT: the prior peak position (time)
PostT=: the current peak position (time)
PeakTsum: the latest peak position

ST13

N

MAX value =
SV?

Y (Trapezoidal shape)

ST14

PostT=i
PeakTsum=(PreT+PostT)/2

A midpoint is determined as a peak
position when the waveform is
trapezoidal

FIG. 7

Start

ST21

Reading by a magnetic head

ST22

Analog signal is amplified

ST23

Amplified analog signal is converted to Digital signal

ST24

A judgment level is set by following the output level from AD converter to detect a peak point

ST25

A processing is implemented to prevent a read error due to shifted peak points

ST26

Peak point information and time interval information is acquired and output

ST27

A level is inverted, triggered by the peak point information, and this is repeated every time a time interval is completed to generate F2F signal

ST28

F2F signal -> "0", "1" conversion

End

# FIG. 8

FIG. 9

## INTERNATIONAL SEARCH REPORT

| International application No. |
|---|
| PCT/JP2017/034181 |

**A. CLASSIFICATION OF SUBJECT MATTER**
*G11B5/09*(2006.01)i, *G11B20/10*(2006.01)i, *G11B20/14*(2006.01)i

According to International Patent Classification (IPC) or to both national classification and IPC

**B. FIELDS SEARCHED**

Minimum documentation searched (classification system followed by classification symbols)
G11B5/09, G11B20/10, G11B20/14

Documentation searched other than minimum documentation to the extent that such documents are included in the fields searched
Jitsuyo Shinan Koho         1922-1996    Jitsuyo Shinan Toroku Koho    1996-2017
Kokai Jitsuyo Shinan Koho   1971-2017    Toroku Jitsuyo Shinan Koho    1994-2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2013-211083 A  (Nidec Sankyo Corp.), 10 October 2013 (10.10.2013), claim 1; paragraphs [0019] to [0030]; fig. 1, 2 & US 2015/0108216 A1 paragraphs [0026] to [0038] & WO 2013/146863 A1     & EP 2833357 A1 & CN 104054127 A | 1-6 |

| ☒ Further documents are listed in the continuation of Box C. | ☐ See patent family annex. |
|---|---|

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 26 October 2017 (26.10.17) | 07 November 2017 (07.11.17) |

| Name and mailing address of the ISA/ Japan Patent Office 3-4-3,Kasumigaseki,Chiyoda-ku, Tokyo 100-8915,Japan | Authorized officer Telephone No. |
|---|---|

Form PCT/ISA/210 (second sheet) (January 2015)

**INTERNATIONAL SEARCH REPORT**

International application No.

PCT/JP2017/034181

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2008-518379 A  (Arjo Wiggins Ltd.),<br>29 May 2008 (29.05.2008),<br>paragraphs [0027], [0035] to [0037], [0047] to [0054]; fig. 1, 9, 12<br>& US 2009/0046393 A1<br>paragraphs [0058], [0067] to [0070], [0084] to [0101]<br>& GB 423676 D0          & WO 2006/046016 A2<br>& EP 1805754 A2         & CA 2584773 A1<br>& KR 10-2007-0095879 A  & CN 101053021 A<br>& IL 182328 D0 | 1-6 |
| A | JP 01-053623 A  (Exar Corp.),<br>01 March 1989 (01.03.1989),<br>page 2, lower left column, line 13 to page 3, upper left column, line 6; fig. 2, 3<br>& US 4789838 A<br>column 1, line 47 to column 2, line 10<br>& EP 284279 A1          & DE 3865336 D1<br>& AT 68285 T            & KR 10-1991-0005904 B1 | 1-6 |
| A | JP 2010-244602 A  (Sony Corp.),<br>28 October 2010 (28.10.2010),<br>paragraphs [0061] to [0067]; fig. 6<br>& US 2010/0254546 A1<br>paragraphs [0082] to [0088]<br>& CN 101859581 A | 1-6 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013211083 A